# EUROPEAN PATENT APPLICATION

(11) **EP 4 030 506 A1**
(43) Date of publication of application: **20.07.2022**
(21) Application number: 20883560.3
(22) Date of filing: 23.10.2020
(51) Int. Cl.: H01M 4/36, H01M 4/587, H01M 4/62, H01M 10/0525, C01B 32/05, C01B 32/21

(54) **METHOD FOR PREPARING ANODE ACTIVE MATERIAL, ANODE ACTIVE MATERIAL, ANODE COMPRISING SAME, AND SECONDARY BATTERY COMPRISING THE ANODE**

(30) Priority: 28.10.2019 KR 20190134845
(71) Applicant: LG ENERGY SOLUTION, LTD., Seoul 07335 (KR)
(72) Inventor: LEE, Chang Ju, Daejeon 34122 (KR); WOO, Sang Wook, Daejeon 34122 (KR); KIM, Hyun Chul, Daejeon 34122 (KR)
(74) Representative: Hoffmann Eitle
(86) International application number: PCT/KR2020/014567
(87) International publication number: WO 2021/085946

(57) **Abstract**

The present invention relates to: a method for producing a negative electrode active material, the method including mixing and first heat treating a carbonaceous core and pitch to form composite particles, and mixing and second heat treating the composite particles and pitch; a negative electrode active material; a negative electrode; and a secondary battery.

## Description

### TECHNICAL FIELD

### Cross-reference to Related Applications

This application claims the benefit of the priority of Korean Patent Application No. 10-2019-0134845, filed on October 28, 2019, the disclosure of which is incorporated herein in its entirety by reference.

### Technical Field

The present invention relates to: a method for producing a negative electrode active material, the method including mixing and first heat treating a carbonaceous core and pitch to form composite particles, and mixing and second heat treating the composite particles and pitch; a negative electrode active material; a negative electrode; and a secondary battery.

### BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased. In general, a secondary battery is composed of a positive electrode, a negative electrode, an electrolyte, and a separator. The negative electrode may include a negative electrode active material in which lithium ions from the positive electrode are intercalated and deintercalated, and a binder which imparts adhesion so that the negative electrode active material is not deintercalated from the negative electrode. As the binder among these, a styrene-butadiene rubber (SBR) has been primarily used. The SBR is a point-type binder and serves to impart adhesion (negative electrode adhesion) between the negative electrode active materials and/or between the negative electrode active material and a current collector.

Meanwhile, a carbonaceous material such as graphite may be used as the negative electrode active material. However, since the carbonaceous material have multiple large pores formed on the surface thereof, the adhering area between the SBR and the carbonaceous material is reduced, and thus there is a limitation in that the adhesion imparting ability of the SBR is reduced. In order to solve this, there is a method that forms a functional group including oxygen, etc. on the surface of the carbonaceous material, but this reduces the capacity of the carbonaceous material.

Therefore, the present invention suggests a novel method for improving negative electrode adhesion by reducing the multiple large pores present on the surface of the carbonaceous material.

### DISCLOSURE OF THE INVENTION

### TECHNICAL PROBLEM

An aspect of the present invention provides a method for producing a negative electrode active material which may improve negative electrode adhesion, and a negative electrode active material.

Another aspect of the present invention provides a negative electrode and a secondary battery including the negative electrode active material.

### TECHNICAL SOLUTION

According to an aspect of the present invention, there is provided a method for producing a negative electrode active material, the method including: mixing and first heat treating a carbonaceous core and pitch to form composite particles; and mixing and second heat treating the composite particles and pitch.

According to another aspect of the present invention, there is provided a negative electrode active material including a carbonaceous core and a carbon coating layer, and having a total pore volume of 0.003 cm³/g to 0.010 cm³/g.

According to another aspect of the present invention, there is provided a negative electrode including the negative electrode active material.

According to another aspect of the present invention, there is provided a secondary battery including the negative electrode.

### ADVANTAGEOUS EFFECTS

According to the present invention, since a carbon coating layer with a smooth surface may be disposed on the carbonaceous core, the total pore volume of a negative electrode active material may be reduced. Thus, adhesion between the negative electrode active material and a binder may be strengthened, thereby improving negative electrode adhesion and life characteristics of the battery.

### MODE FOR CARRYING OUT THE INVENTION

Hereinafter, the present invention will be described in more detail to allow for a clearer understanding of the present invention.

It will be understood that terms or words used in the present disclosure and claims should not be interpreted as having a meaning that is defined in common or in dictionaries, however should be interpreted in consistent with the technical scope of the present invention based on the principle that inventors may appropriately define the concept of the terms to explain the invention at his best method.

The terminology used herein is for the purpose of describing particular exemplary embodiments only and is not intended to limit the present invention. The terms of a singular form may include plural forms unless the context clearly indicates otherwise.

It will be understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The expression "D₅₀" in the present specification may be defined as a particle diameter at a cumulative volume of 50% in a particle size distribution curve (graph curve of particle size distribution) of particles. The D₅₀, for example, may be measured by using a laser diffraction method. The laser diffraction method is capable of measuring a particle diameter from a submicron range to a range of several millimeters, thereby obtaining results of high reproducibility and high resolution.

A Brunauer-Emmett-Teller (BET) specific surface area herein may be measured through BELSORP-mini II equipment (Bell Japan Inc.).

A total pore volume herein may be measured from a BET plot by using the BELSORP-mini II equipment (Bell Japan Inc.).

### <Method for Producing Negative Electrode Active Material>

According to an embodiment of the present invention, a method for producing a negative electrode active material, the method including: mixing and first heat treating a carbonaceous core and pitch to form composite particles; and mixing and second heat treating the composite particles and pitch.

### (1) Forming Composite Particles

The forming of the composite particles may include mixing and first heat treating a carbonaceous core and pitch.

The carbonaceous core may have an average particle diameter (D50) of 7-25 µm, particularly, 8-23 µm, and more particularly, 14-22 µm. In the case in which the above range is satisfied, aggregation phenomenon of particles during pitch coating may be minimized.

The carbonaceous core may include at least one selected from the group consisting of natural graphite, artificial graphite, and mesocarbon microbeads (MCMB).

The carbonaceous core may include secondary particles in which carbonaceous matrix and a plurality of natural graphite particles are assembled to each other.

The secondary particles may be spherical. Specifically, the plurality of natural graphite contained in the secondary particles may be formed by modifying flake natural graphite. Specifically, the plurality of natural graphite may be formed by the aggregation of the flake natural graphite, and more specifically, the natural graphite may be bonded to each other by the curl of the flake natural graphite, and thus the secondary particles may have a spherical shape or a nearly spherical shape.

The secondary particles may have a sphericity of 0.73 to 0.97, particularly 0.83 to 0.96, and more particularly 0.92 to 0.95. In the case in which the above range is satisfied, a high density negative electrode may be prepared, and there is an effect of improving negative electrode adhesion (force to prevent the negative electrode active material from being exfoliated from the negative electrode). The sphericity may be measured by a digital image analysis method (e.g., using an equipment name, Morphologi4 (Malvern Ltd.)) by capturing a 2D image of 3D particles.

The carbonaceous matrix may serve to maintain the state in which the plurality of natural graphites are bonded. The carbonaceous matrix may include amorphous carbon.

The method for producing a negative electrode active material of the present invention may further include preparing the carbonaceous core. The preparing of the carbonaceous core may include mixing a plurality of flake natural graphite and pitch and then spheroidizing a resulting mixture, and thus the carbonaceous core containing the secondary particles may be formed.

The spheroidizing may be carried out by a manner in which the flake natural graphite is repeatedly folded or assembled by controlling the rotor speed or time in equipment such as a mill.

The preparing of the carbonaceous core may further include removing internal pores of the particles formed by mixing the plurality of flake natural graphite and pitch and then spheroidizing the mixture. As a method for removing the internal pores of the particles, a method of filling the internal pores with pitch, a cold isostatic pressing (CIP) method, or the like may be performed. Thus, the pore volume of the prepared secondary particles may be a low level. In addition, the specific surface area of the negative electrode active material may be controlled through the removing of the internal pores, and thus the side reaction of the electrolyte solution may be reduced.

The pitch mixed with the carbonaceous core may be any one among petroleum-based pitch or coal-based pitch.

In the forming of the composite particles, a weight ratio of the carbonaceous core and the pitch may be in a range of 1:0.010 to 1:0.056, particularly, 1:0.040 to 1:0.056, and more particularly 1:0.045 to 1:0.056. In the case in which the above range is satisfied, interfacial resistance is sufficiently low to improve the rapid charging performance of the battery and maintain the capacity of the negative electrode active material at a high level, and when the negative electrode is rolled, a rapid increase in the specific surface area may be suppressed, thereby improving initial efficiency and high-temperature storage performance of the battery.

The first heat treatment may be performed at a temperature of 1,000 °C to 1,400 °C, particularly, 1,050 °C to 1,350 °C, and more particularly, 1,100 °C to 1,300 °C. The first carbon coating layer may be formed on the carbonaceous core by the first heat treatment. In the case in which the above temperature range is satisfied, the amount of hydrogen in the first carbon coating layer is suppressed, and thus the reaction of lithium ions and hydrogen may be reduced.

### (2) Mixing and Second Heat Treating Composite Particles and Pitch

In the mixing and second heat treating of the composite particles and pitch, a weight ratio of the composite particles and the pitch may be in a range of 1:0.010 to 1:0.052, particularly, 1:0.035 to 1:0.052, and more particularly 1:0.045 to 1:0.052. In the case in which the above range is satisfied, interfacial resistance is sufficiently low to improve the rapid charging performance of the battery and maintain the capacity of the negative electrode active material at a high level, and when the negative electrode is rolled, a rapid increase in the specific surface area may be suppressed, thereby improving initial efficiency and high-temperature storage performance of the battery.

The second heat treatment may be performed at a temperature of 1,000 °C to 1,400 °C, particularly, 1,050 °C to 1,350 °C, and more particularly, 1,100 °C to 1,300 °C. The second carbon coating layer may be formed on the first carbon coating layer by the second heat treatment. In the case in which the above temperature range is satisfied, the amount of hydrogen in the second carbon coating layer is suppressed, and thus the reaction of lithium ions and hydrogen may be reduced.

In case of the related art, in the case of the carbonaceous core, in which the carbon coating layer is not formed, and the carbonaceous core of which the carbon coating layer is formed on the surface only in a single layer by one heat treating process, pores inevitably present in the core are not sufficiently filled (the total pore volume corresponds to a high level). In the case in which the pores are present numerously, there is a limitation in that the contacting area between the point-type binder such as SBR and the carbonaceous core (or the carbonaceous core in which the carbon coating layer is formed only in a single layer by one heat treating process) is reduced, and thus the negative electrode adhesion is reduced.

On the other hand, in the present invention, the pores of the carbonaceous core may be sufficiently filled through mixing and heat treating the pitch twice, and the carbon coating layer with a relatively smooth surface may be formed on the carbonaceous core (the total pore volume corresponds to a low level). Accordingly, since the contacting area between the point-type binder such as SBR and the carbonaceous core can be secured, the negative electrode adhesion may be improved.

### <Negative Electrode Active Material>

A negative electrode active material according to another embodiment of the present invention may include a carbonaceous core and a carbon coating layer, and may have a total pore volume of 0.003 cm³/g to 0.010 cm³/g. Here, since the carbonaceous core is the same as the carbonaceous core introduced in the method for producing the negative electrode active material as described above, the description will be omitted.

The carbon coating layer may be disposed on the carbonaceous core, and specifically, the carbon coating layer may cover at least a portion of the surface of the carbonaceous core.

The carbon coating layer may include amorphous carbon, and particularly, may be formed of the amorphous carbon.

The carbon coating layer may be formed by being subjected to the "mixing and first heat treating a carbonaceous core and pitch to form composite particles, and mixing the composite particles and pitch and then second heat treating a resulting mixture" introduced in the above-described embodiment.

The negative electrode active material may have a total pore volume of 0.003 cm³/g to 0.010 cm³/g, particularly 0.0035 cm³/g to 0.0090 cm³/g, and particularly 0.0035 cm³/g to 0.0045 cm³/g. If the total pore volume is less than 0.003 cm³/g, the ionic conductivity is reduced due to the limited contacting area between the electrolyte solution and the negative electrode active material, and thus this is disadvantageous to high-rate charge and discharge of the battery. If the total pore volume is greater than 0.010 cm³/g, the adhesion between the negative electrode active material and the binder is reduced, and thus the negative electrode adhesion is generally reduced and life characteristics of the battery is reduced. The above pore volume of 0.003 cm³/g to 0.010 cm³/g corresponds to a numerical range derived because pores on the carbonaceous core may be effectively filled by twice coating through the pitch.

The negative electrode active material may have a BET specific surface area of 0.5 m²/g to 2.0 m²/g, particularly, 1.0 m²/g to 1.9 m²/g, and more particularly, 1.0 m²/g to 1.4 m²/g. In the case in which the above range is satisfied, the adhesion between the negative electrode active material and the binder is improved, and thus the negative electrode adhesion and life characteristics of the battery may be improved.

### <Negative Electrode>

A negative electrode according to yet another embodiment of the present invention may include the negative electrode active material of the above-described embodiment.

Specifically, the negative electrode may include a negative electrode active material layer, and more specifically, may include a current collector and the negative electrode active material layer.

The current collector is not particularly limited so long as it has conductivity without causing adverse chemical changes in the battery. For example, copper, stainless steel, aluminum, nickel, titanium, fired carbon, aluminum or stainless steel that is surface-treated with one of carbon, nickel, titanium, silver, or the like may be used. Specifically, a transition metal that absorbs carbon well, such as copper and nickel, may be used as the current collector. The current collector may have a thickness of 6 pm to 20 µm, but the thickness of the current collector is not limited thereto.

The negative electrode active material layer may be disposed on the current collector. The negative electrode active material layer may be disposed on at least one surface of the current collector, and specifically on one surface or both surfaces thereof.

The negative electrode active material layer may include the negative electrode active material, and in this case, the negative electrode active material may be the negative electrode active material of the above-described embodiment.

The negative electrode may include at least one among the binder and the conductive agent.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon ; metal powder such as aluminum powder, and nickel powder; conductive whiskers such as zinc oxide whiskers and potassium titanate whiskers; conductive metal oxide such as titanium oxide; or polyphenylene derivatives, may be used.

### <Secondary Battery>

A secondary battery according to still yet another embodiment of the present invention may include a negative electrode, and the negative electrode is the same as the negative electrode of the above-described embodiment.

Specifically, the secondary battery may include the negative electrode, a positive electrode, a separator disposed between the negative electrode and the positive electrode, and an electrolyte, wherein the negative electrode is the same as the above-described negative electrode. Since the negative electrode has been described above, detailed descriptions thereof will be omitted.

The positive electrode may include a positive electrode collector and a positive electrode active material layer which is formed on the positive electrode collector and includes a positive electrode active material.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 pm to 500 pm and may have a surface with fine roughness to improve adhesion to the positive electrode active material. For example, the positive electrode current collector may be used in various forms such as a film, a sheet, a foil, a net, a porous body, a foam, and a non-woven body.

The positive electrode active material may be a typically used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; nickel (Ni)-site type lithium nickel oxide expressed by a chemical formula of LiNi_{1-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of Li being substituted with alkaline earth metal ions, but the positive electrode active material is not limited thereto. The positive electrode may be Limetal.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

Also, the positive electrode binder functions to improve binding between positive electrode active material particles and adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, poly tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but is not limited thereto.

Specifically, the electrolyte may include a non-aqueous organic solvent and a metal salt.

For example, aprotic organic solvents such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used as the non-aqueous organic solvent.

In particular, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope and technical spirit of the present invention, and such modifications and alterations are definitely included in the attached claims.

### Examples and Comparative Examples

### Example 1: Production of Negative Electrode Active Material

Flake natural graphite (D₅₀: 250 nm) and pitch were mixed and then subjected to a spheroidization process to prepare secondary particles (D₅₀: 16 µm, sphericity: 0.93), and the prepared secondary particles were used as a carbonaceous core.

The carbonaceous core and pitch were mixed in a weight ratio of 1:0.049 and then stirred with a mixer. Thereafter, the mixture was heat-treated at 1,200 °C for 8 hours to prepare composite particles.

The composite particles and pitch were mixed in a weight ratio of 1:0.047 and then stirred with a mixer. Thereafter, the mixture was heat-treated at 1,300 °C for 9 hours to produce a negative electrode active material.

### Example 2: Production of Negative Electrode Active Material

Flake natural graphite (D₅₀: 250 nm) and pitch were mixed and then subjected to a spheroidization process to prepare secondary particles (D₅₀: 16 µm, sphericity: 0.93), and the prepared secondary particles were used as a carbonaceous core.

The carbonaceous core and pitch were mixed in a weight ratio of 1:0.043 and then stirred with a mixer. Thereafter, the mixture was heat-treated at 1,250 °C for 7 hours to prepare composite particles.

The composite particles and pitch were mixed in a weight ratio of 1:0.042 and then stirred with a mixer. Thereafter, the mixture was heat treated at 1,300 °C for 9 hours to produce a negative electrode active material.

### Example 3: Production of Negative Electrode Active Material

Flake natural graphite (D₅₀: 250 nm) and pitch were mixed and then subjected to a spheroidization process to prepare secondary particles (D₅₀: 16 µm, sphericity: 0.93), and the prepared secondary particles were used as a carbonaceous core.

The carbonaceous core and pitch were mixed in a weight ratio of 1:0.032 and then stirred with a mixer. Thereafter, the mixture was heat-treated at 1,200 °C for 7 hours to prepare composite particles.

The composite particles and pitch were mixed in a weight ratio of 1:0.031 and then stirred with a mixer. Thereafter, the mixture was heat-treated at 1,300 °C for 9 hours to produce a negative electrode active material.

### Example 4: Production of Negative Electrode Active Material

Flake natural graphite (D₅₀: 250 nm) and pitch were mixed and then subjected to a spheroidization process to prepare secondary particles (D₅₀: 11 µm, sphericity: 0.90), and the prepared secondary particles were used as a carbonaceous core.

The carbonaceous core and pitch were mixed in a weight ratio of 1:0.043 and then stirred with a mixer. Thereafter, the mixture was heat-treated at 1,300 °C for 6 hours to prepare composite particles.

The composite particles and pitch were mixed in a weight ratio of 1:0.042 and then stirred with a mixer. Thereafter, the mixture was heat-treated at 1,300 °C for 8 hours to produce a negative electrode active material.

### Comparative Example 1 : Production of Negative Electrode Active Material

The carbonaceous core and pitch used in Example 1 were mixed in a weight ratio of 1:0.064 and then stirred with a mixer. Thereafter, the mixture was heat-treated at 1,300 °C for 10 hours to prepare composite particles.

**[Table 1]**

| | BET specific surface area (m²/g) of negative electrode active material | Total pore volume (10⁻³cm³/g) |
|---|---|---|
| Example 1 | 1.2 | 3.9 |
| Example 2 | 1.6 | 5.0 |
| Example 3 | 1.4 | 4.2 |
| Example 4 | 1.9 | 8.9 |
| Comparative Example 1 | 2.8 | 16.7 |

The BET specific surface area was measured through BELSORP-mini II equipment (Bell Japan Inc.). The total pore volume was measured from a BET plot by using the BELSORP-mini II equipment (Bell Japan Inc.).

### Experimental Example 1: Evaluation of Negative Electrode Adhesion

Negative electrodes were prepared as follows by using each negative electrode active material of Examples 1 to 4 and Comparative Example 1.

Specifically, each negative electrode active material, Super C65 as a conductive agent, a styrene-butadiene rubber (SBR) as a binder, and carboxymethyl cellulose (CMC) as a thickener were mixed in a weight ratio of 96.6:1:1.3:1.1, and water was added thereto to prepare a negative electrode slurry. The negative electrode slurry was coated on a copper foil (current collector) and then dried in vacuum at 130 °C for 10 hours to produce a negative electrode (1.4875 cm²). A loading amount of the prepared negative electrode is 3.61 mAh/cm².

The negative electrode was punched out at 20 mm×150 mm, fixed to the center of a 25 mm×75 mm slide glass using a tape, and then 90-degree peel strength was measured while peeling off the current collector using UTM. Five or more peeling strengths were measured and the evaluation was carried out using an average value thereof, and the results are shown in Table 2.

**[Table 2]**

| | Negative electrode adhesion (gf/10mm) |
|---|---|
| Example 1 | 30 |
| Example 2 | 27 |
| Example 3 | 25 |
| Example 4 | 18 |
| Comparative Example 1 | 14 |

## Claims

1. A method for producing a negative electrode active material, the method comprising:
mixing and first heat treating a carbonaceous core and pitch to form composite particles; and
mixing and second heat treating the composite particles and pitch.

2. The method of claim 1, wherein the first heat treatment is carried out at a temperature of 1,000 °C to 1,400 °C.

3. The method of claim 1, wherein the second heat treatment is carried out at a temperature of 1,000 °C to 1,400 °C.

4. The method of claim 1, wherein, in the forming of the composite particles, the weight ratio of the carbonaceous core and the pitch is 1:0.010 to 1:0.056.

5. The method of claim 1, wherein, in the mixing and second heat treating of the composite particles and the pitch, the weight ratio of the composite particles and the pitch is 1:0.010 to 1:0.052.

6. The method of claim 1, wherein the carbonaceous core has an average particle diameter (D₅₀) of 7 µm to 25 µm.

7. The method of claim 1, wherein the carbonaceous core comprises at least one selected from the group consisting of natural graphite, artificial graphite, and mesocarbon microbeads (MCMB).

8. The method of claim 1, wherein the carbonaceous core comprises secondary particles in which carbonaceous matrix and a plurality of natural graphite particles are assembled to each other.

9. The method of claim 1, further comprising preparing the carbonaceous core,
wherein the preparing of the carbonaceous core comprises mixing a plurality of flake natural graphite and pitch and then spheroidizing a resulting mixture.

10. The method of claim 9, further comprising removing internal pores after the spheroidizing.

11. A negative electrode active material comprising a carbonaceous core and a carbon coating layer, and having a total pore volume of 0.003 cm³/g to 0.010 cm³/g.

12. The negative electrode active material of claim 11, having a BET specific surface area of 0.5 m²/g to 2.0 m²/g.

13. The negative electrode active material of claim 11, wherein the carbonaceous core has an average particle diameter (D50) of 7 pm to 25 µm.

14. A negative electrode comprising the negative electrode active material of claim 11.

15. A secondary battery comprising the negative electrode of claim 14.
